# EUROPEAN PATENT SPECIFICATION

(11) **EP 3 552 842 B1**
(45) Date of publication and mention of the grant of the patent: **27.04.2022**
(21) Application number: 17877540.9
(22) Date of filing: 19.06.2017
(51) Int. Cl.: B60C 9/18, B60C 1/00, D07B 1/06, B60C 9/20

(54) **TIRE FOR HEAVY LOAD**
REIFEN FÜR SCHWERE LASTEN
PNEU POUR CHARGEMENT LOURD

(30) Priority: 09.12.2016 JP 2016239342
(43) Date of publication of application: 16.10.2019
(73) Proprietor: Bridgestone Corporation, Tokyo 104-8340 (JP)
(72) Inventor: SAITO Noboru, Tokyo 104-8340 (JP)
(74) Representative: Oxley, Robin John George
(86) International application number: PCT/JP2017/022575
(87) International publication number: WO 2018/105153

(56) References cited:
- WO-A1-2006/080373
- WO-A1-2014/192811
- WO-A1-2017/047587
- JP-A- 2005 271 863
- US-A- 5 394 919

## Description

### [Technical Field]

The present invention relates to a heavy load tire having a belt layer at an outer side of a carcass.

### [Background Art]

Conventionally, a heavy load tire has a belt layer laminating a plurality of belts formed of a metal cord-rubber composite, which is formed by coating a metal cord with a rubber composition, and the belt layer is arranged between a tread portion and a carcass in order to impart rigidity to the tread portion. As one method for improving durability of the heavy load tire, it is considered to improve wear resistance of the tread portion. In order to improve the wear resistance, it is effective to widen a belt forming the belt layer, in a tire width direction. The widening of the belt can further improve the rigidity of the tread portion, and this leads to improvement of the wear resistance of a surface of the tread portion.

However, when the belt is widen, an end portion of the belt in the tire width direction is located at an outer side of the tire, and therefore strain of the end portion of the belt becomes large. The strain includes shear strain due to air pressure of the tire, kinetic shear strain due to a load, driving force, braking force and lateral force applied to the tire, and the like. When the strain of the end portion of the belt becomes large, fatigue of the rubber composition of the end portion of the belt is increased, and therefore a crack is apt to be generated on the end portion and crack resistance of the belt is deteriorated. The deterioration of the crack resistance of the belt leads to deterioration of the durability of the tire.

Thus, it is proposed to improve the crack resistance by changing composition of the metal cord and composition of the rubber composition in the belt formed of a metal cord-rubber composite.

A known metal cord-rubber composite is disclosed in WO 2014/192811 A.

A known heavy load tire is disclosed in WO 2006/080373 A.

### [Summary of Invention]

### [Problems to be Solved by the Invention]

Durability of a heavy load tire has been improved by adopting the belt using the conventional crack resistance improving technique. However, in a crushed stones site, a mine or a dam construction site, further lengthening of the life of the heavy load tire in a severe use environment such as steep uneven ground is desired. Accordingly, further improvement of the durability of the heavy load tire is desired.

Accordingly, an object of the present invention is to provide a heavy load tire with a belt widened, capable of achieving both of superior wear resistance of a tread portion and superior crack resistance of the belt at a high level, so that durability of a whole of the tire can be further improved.

The present invention provides a heavy load tire as defined in claim 1.

The dependent claims define preferred embodiments of the present invention.

### [Brief Description of Drawings]

[Fig. 1] Fig. 1 is a cross-sectional view in a tire width direction according to one embodiment.
[Fig. 2] Fig. 2 is an enlarged cross-sectional view of a part of a third belt shown in Fig. 1.

### [Description of Embodiments]

Hereinafter, a heavy load tire according to an embodiment of the present invention will be described with reference to the drawings. The same or similar reference signs are assigned to the same or similar parts in the drawings.

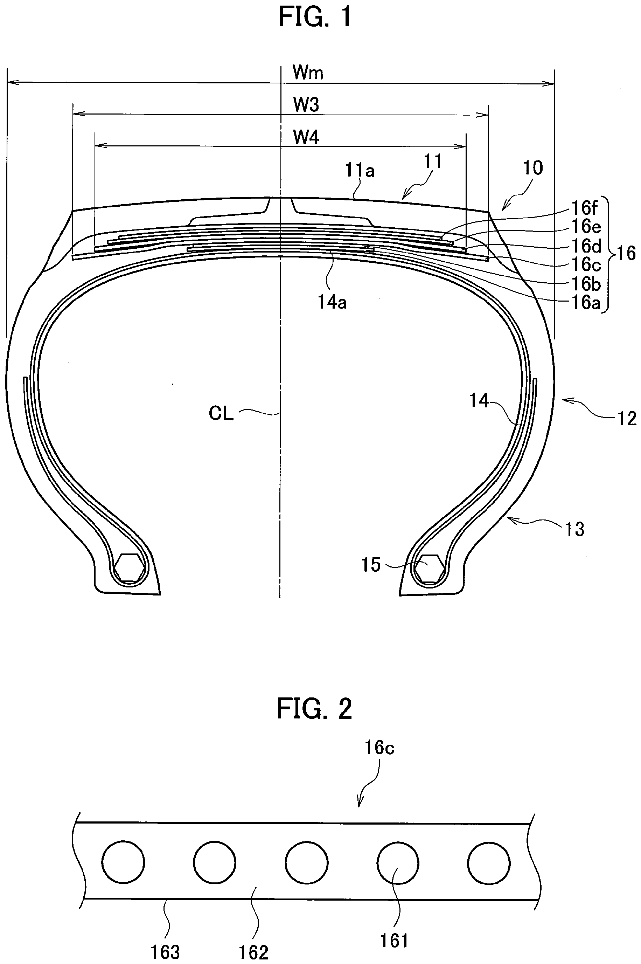

Fig. 1 shows a cross-sectional view in a tire width direction of the heavy load tire according to one embodiment of the present invention. This figure is a cross-sectional view in the tire width direction in a state in which the heavy load tire according to the present embodiment is mounted to an applicable rim with air filled at predetermined air pressure. Fig. 2 shows an enlarged cross-sectional view of a part of a third belt shown in Fig. 1.

Here, the applicable rim is a rim defined by industrial standard effective to a region where the tire is manufactured and used, for example, JATMA (Japan Automobile Tyre Manufacturers Association) YEAR BOOK in Japan, ETRTO (European Tyre and Rim Technical Organisation) STANDARD MANUAL in Europe, and TRA (THE TIRE and RIM ASSOCIATION INC.) YEAR BOOK in the United States.

Further, "a tire maximum width" denotes a longest distance between outer surfaces of side wall portions in a section in the tire width direction, in a no-load state in which the tire is mounted to the applicable rim with air filled at the predetermined air pressure. "A belt width" denotes a distance between both ends in the tire width direction of the belt in a section in the tire width direction, in a state in which the tire is mounted to the applicable rim with air filled at the predetermined air pressure. "The predetermined air pressure" denotes air pressure defined in accordance with the maximum load capacity in the standards described above. "The maximum load capacity" denotes maximum mass allowable to be loaded by the tire in the standards described above.

As shown in Fig. 1, the heavy load tire 10 is provided with a tread portion 11, a pair of side wall portions 12 continued to both ends of the tread portion 11, and a pair of bead portions 13 continued to the side wall portions 12. In Fig. 1, a groove and a block formed on a tread surface 11a, which is a surface of the tread portion 11, are omitted.

A carcass 14 extended in a troidal manner is arranged between the bead portions 13 forming a pair. The carcass 14 is fixed around a bead core 15 embedded in the bead portion 13, for example, by being folded from an inner side toward an outer side in the tire width direction.

A belt layer 16 formed by laminating six belts 16a to 16f in a tire radial direction, is arranged between the carcass 14 and the tread portion 11, namely at an outer side in the tire radial direction of a crown portion 14a of the carcass 14. The six belts are formed by a first belt 16a, a second belt 16b, a third belt 16c, a fourth belt 16d, a fifth belt 16e, and a sixth belt 16f in this order from an inner side (inner peripheral side) in the tire radial direction. Each of the belts 16a to 16f is formed of a metal cord-rubber composite formed by respectively coating metal cords with a rubber composition. The enlarged cross-sectional view of a part of the third belt 16c is exemplarily shown in Fig. 2. As shown in Fig. 2, the third belt 16c is formed of a metal cord-rubber composite 163 formed by coating respective metal cords 161 with a rubber composition 161. Each of other belts 16a to 16f has a similar configuration. The belt layer may be formed by laminating seven or more belts.

The first belt 16a and the second belt 16b are served to mainly maintain inner pressure in order to keep a shape of the tire. The fifth belt 16e and the sixth belt 16f are served to mainly interrupt outer pressure. The third belt 16c and the fourth belt 16d are served to largely derive improvement of the wear resistance of the surface of the tread portion 11. The rigidity of the tread portion 11 is improved by a whole of the belt layer 16.

In order to improve the wear resistance of the tread portion 11, it is effective to enlarge a width (width in the tire width direction) of each of the third belt 16c, which is arranged at a third position from the inner side (inner peripheral side) in the tire radial direction, and the fourth belt 16d, which is arranged at a fourth position from the inner side (inner peripheral side) in the tire radial direction. However, as described above, when the width of the belt is enlarged, the strain in the end portion of the belt in the tire width direction becomes large, and therefore a crack is apt to be generated on the end portion and crack resistance of the belt is deteriorated. Thus, in the present embodiment, a new metal cord-rubber composite capable of deriving the crack resistance equivalent to or more than that of the conventional narrow width belt, even though a width W3 in the tire width direction of the third belt 16c and a width W4 in the tire width direction of the fourth belt 16d are enlarged, is adopted in the third belt 16c and the fourth belt 16d.

In the metal cord in the new metal cord-rubber composite, N (nitrogen) atoms in the surface are set in a range between 2 atom% and 60 atom% of and a Cu/Zn ratio in the surface is set in a range between 1 and 4. The rubber composition that coats the metal cord includes 1 part by mass to 15 parts by mass of silica and 0 parts by mass to 1 part by mass of cobalt-containing compound based on 100 parts by mass of rubber component. The metal cord-rubber composite having such a configuration is superior in both of heat resistant adhesiveness between the metal cord and the rubber composition and crack propagation resistance (crack resistance), and therefore both of improvement of the heat resistant adhesiveness between the metal cord and the rubber composition and improvement of the crack propagation resistance (crack resistance) can be achieved at a high level. This mechanism will be described below.

In order to achieve both of superior wear resistance of the tread portion and superior crack resistance of the belt at a high level by adopting the new metal cord-rubber composite in the third belt 16c and the fourth belt 16d, the width W3 of the third belt 16c and the width W4 of the fourth belt 16d, which are widened, are preferably set in ranges as below. The width W3 is set in a range between 65% and 85% of a tire maximum width Wm, and the width W4 is set in a range between 55% and 75% of the tire maximum width Wm. In a case in which each of the width W3 and the width W4 is smaller than the range described above, improvement of the wear resistance can be hardly obtained, and in a case in which each of the width W3 and the width W4 is larger than the range described above, improvement of the crack resistance can be hardly obtained. The width W3 is more preferably set in a range between 70% and 75% of the tire maximum width Wm, and the width W4 is more preferably set in a range between 65% and 70% of the tire maximum width Wm.

In this way, in the present embodiment, the width W3 of the third belt 16c is set in a range between 65% and 85% of the tire maximum width Wm, and the width W4 of the fourth belt 16d is set in a range between 55% and 75% of the tire maximum width Wm. With this widening of the belts, the end portion in the tire width direction of each of the third belt 16c and the fourth belt 16d is further extended toward a tire outer side, and therefore the third belt 16c and the fourth belt 16d can support the tread portion 11 across a wider region in the tire width direction. With this, the rigidity of a whole of the tread portion 11 can be further improved, and therefore the wear resistance of the surface of the tread portion can be improved. Further, the new metal cord-rubber composite having the configuration described above can achieve both of the improvement of the heat resistant adhesiveness between the metal cord and the rubber composition and the improvement of the crack resistance at a high level. By adopting the metal cord-rubber composite in the third belt 16c and the fourth belt 16d, even in a case in which the strain of the end portion of the belt becomes large when the belt is widened, the generation of the crack in the end portion of the belt can be further firmly suppressed. Accordingly, the present invention can provide the heavy load tire capable of achieving both of superior wear resistance of the tread portion and superior crack resistance of the belt at a high level and capable of further improving the durability of a whole of the tire.

Further, in a case in which the width W3 of the third belt 16c is set in a range between 70% and 75% of the tire maximum width Wm and the width W4 of the fourth belt 16d is set in a range between 65% and 70% of the tire maximum width Wm, both of superior wear resistance of the tread portion and superior crack resistance of the belt can be achieved at further higher level.

In the present embodiment, the width W3 and the width W4 are set to be W4 < W3 within the ranges described above, however, the width W3 and the width W4 may be set to be W3 ≤ W4 within the ranges described above in accordance with a situation.

The metal cord-rubber composite as same as that adopted in the third belt 16c and the fourth belt 16d may be adopted in the first belt 16a, the second belt 16b, the fifth belt 16e, and the sixth belt 16f, or alternatively a metal cord-rubber composite different from that adopted in the third belt 16c and the fourth belt 16d may be adopted in the first belt 16a, the second belt 16b, the fifth belt 16e, and the sixth belt 16f.

Next, the metal cord-rubber composite adopted in the third belt 16c and the fourth belt 16d is described in detail.

### Metal cord

In the present embodiment, the metal cord adopted in the metal cord-rubber composite is formed by twisting a plurality of metal wires (metal steel wire) or formed of a single metal wire. The metal wire to be adopted is not especially limited, and examples thereof include wire formed of iron, steel (stainless steel), lead, aluminum, copper, brass, bronze, Monel alloy, nickel, zinc or the like.

It is preferable that the metal wire has a plating layer, which is formed by a conventional method, on a surface thereof. The plating layer is not especially limited, however examples of the plating layer include a zinc plating layer, a copper plating layer, a brass (brass) plating layer and the like. Of these layers, the brass (brass) plating layer is preferable from a viewpoint of initial adhesiveness and hydrothermal adhesiveness to the rubber composition and forming favorable rubber metal adhesive layer.

In the composition of the brass plating forming the brass (brass) plating layer, it is preferable that Cu (copper) is set in a range between 40 mass% and 80 mass% and Zn (zinc) is set in a range between 20 mass% and 60 mass% from a viewpoint of processing performance of the steel cord and adhesiveness to rubber, and it is more preferable that Cu is set in a range between 55 mass% and 70 mass% and Zn is set in a range between 30 mass% and 45 mass%.

In this way, by adopting the metal cord formed by a single metal wire on which the brass plating in which Cu is set in a range between 40 mass% and 80 mass % and Zn is set in a range between 20 mass% and 60 mass%, is applied or by adopting the metal cord formed by twisting a plurality of the metal wires, a heavy load tire having superior processing performance of the metal cord and further favorable adhesiveness of the metal cord to the rubber composition, can be provided.

An example adopting a steel wire as the metal wire is described in further detail. The steel wire is a linear metal including steel, namely iron as a main component (mass of iron to the total mass of the metal steel wire is 50 mass% or more). The metal may include other metal other than iron described above.

A diameter of the steel wire is preferably set in a range between 0.1 mm and 5.5 mm from a viewpoint of operation performance and durability, and the diameter is more preferably set in a range between 0.15 mm and 5.26 mm. Here, the diameter of the steel wire denotes a longest distance between two points on an outer periphery of the steel wire in a section orthogonal to an axial line of the steel wire. A shape of the section orthogonal to the axial line of the steel wire is not especially limited. The shape is normally a circular shape, however the shape may be an oval shape, a rectangular shape, a triangular shape, a polygonal shape, or the like. In a case in which the steel cord, which is a metal reinforcement cord formed by twisting the steel wires, is adopted in the carcass or the belt of the tire, it is preferable that the shape of the section of the steel wire is a circular shape and the diameter thereof is set in a range between 0.1 mm and 0.5 mm. Further, it is preferable that the steel wire has the brass (brass) plating layer having the composition described above, on the surface thereof. A thickness of the plating layer is not especially limited, however the thickness is generally set in a range, for example, 100 nm and 300 nm.

In the present embodiment, the metal cord formed of the steel cord can be obtained by a conventional method, for example, by twisting a plurality of the metal wires such as the steel wire on which the brass plating is applied so as to form a 1 × 3 structure, a 1 × 5 structure, or the like.

In the present embodiment, it is necessary that N (nitrogen) atoms in the surface of the metal cord are set in a range between 2 atom% and 60 atom% from a viewpoint of treat leaving performance (adhesiveness between the metal cord and the rubber composition after coating the metal cord with an unvulcanized rubber composite, leaving it (treat leaving) and vulcanizing it) or the like, and it is also necessary that the Cu/Zn ratio is set in a range between 1 and 4 based on mass. The N atoms in the surface of the metal cord are preferably set in a range between 2.1 atom% and 55.0 atom%, and the Cu/Zn ratio is preferably set in a range between 1.1 and 3.5.

By setting a ratio of the N atoms in the surface of the metal cord to 2 atom% or more, the effect of the present embodiment can be obtained sufficiently. In a case in which the ratio of the N atoms is less than 2 atom%, the treat leaving performance is deteriorated, and in a case in which the ratio of the N atoms is more than 60 atom%, the initial adhesiveness to the rubber is deteriorated. Further, by setting the Cu/Zn ratio in the surface of the metal cord to 1 or more, the effect of the present embodiment can be obtained sufficiently. In a case in which the Cu/Zn ratio is less than 1, the initial adhesiveness is insufficient, and further in a case in which the Cu/Zn ratio is less than 4, superior initial adhesiveness can be obtained. In a case in which the Cu/Zn ratio is more than 4, the hydrothermal adhesiveness is insufficient.

In the present embodiment, the adjustment of the N (nitrogen) atoms in the surface of the metal cord to be in a range between 2 atom% and 60 atom% can be performed, for example, by means of treatment using a triazole compound (rust prevention agent), specifically by suitably combining surface treatments in which the metal cord is brought into contact with a triazole compound solution, or the like. The adjustment of the Cu/Zn ratio in the surface of the metal cord to be in a range between 1 and 4 can be performed, for example, by means of treatment that suitably combines a pH of an acidic buffer solution and a concentration of the triazole solution. As the pH becomes lower, the metal cord having higher Cu/Zn ratio can be obtained.

Examples of the acidic buffer solution include an acetate buffer solution, a phosphate buffer solution, a citrate buffer solution, and the like, each of which has a pH of 5.0 to 7.2. Of these solutions, the acetate buffer solution having a pH of 5.0 to 7.2 is preferable. In a case in which the pH is less than 5.0, it is impossible to set the Cu/Zn ratio to be 4 or less. In a case in which the pH is more than 7.2, it is impossible to set the Cu/Zn ratio to be 1 or more. In a case in which the acetate buffer solution having a pH of 5.0 to 7.2 is adopted, the surface treatment time using the buffer solution is set, for example, in a range between 0.5 seconds and 20 seconds.

Examples of the triazole solution include a solution of one or more kinds of triazole compounds selected from 1,2,4-triazole, 1,2,3-triazole, 3-amino-1,2,4-triazole, 4-amino-1,2,4-triazole, benzotriazole, tolyltriazole, and 3-mercapto-1,2,4-triazole. Of these triazole compounds, 1,2,4-triazole, 1,2,3-triazole, 3-amino-1,2,4-triazole, and 4-amino-,2,4-triazole are preferable. It is preferable that the concentration of the triazole solution is set in a range between 0.01 g/L and 20 g/L. The treatment time may be set in a range between 0.1 seconds and 30 seconds, while it depends on the concentration.

In this way, the surface treatment using the buffer solution having a pH of 5.0 to 7.2 and the treatment using one or more kinds of the triazole compounds selected from 1,2,4-triazole, 1,2,3-triazole, 3-amino-1,2,4-triazole, 4-amino-,2,4-triazole, benzotriazole, tolyltriazole, and 3-mercapto-1,2,4-triazole are applied to the metal cord, so that the metal cord in which the N atoms in the surface of the metal cord is adjusted into a range between 2 atom% and 60 atom% and the Cu/Zn ratio in the surface of the metal cord is adjusted into a range between 1 and 4, can be obtained easily. Consequently, the heavy load tire capable of further improving the durability thereof and being manufactured easily can be provided.

In the present embodiment, "the surface" of the metal cord denotes a surface layer region having a depth of 5 nm from a surface in a radial direction of the metal wire such as a steel wire. The N atoms and the Cu/Zn ratio in the surface of the metal cord are measured after the metal cord is manufactured, and washed and dried as needed, and before the metal cord is coated with the rubber composition.

In the present embodiment (including examples described below), the N atoms in the surface of the metal cord is measured by the X-ray photoelectron spectroscopy (X-ray photoelectron spectroscopy: XPS) method. The Cu/Zn ratio in the surface of the metal cord is measured by the photoelectron spectroscopy method.

### Rubber composition for coating metal cord

The rubber composition adopted as a coating rubber for the metal cord-rubber composite of the present embodiment includes 1 part by mass to 15 parts by mass of silica and 0 (zero) parts by mass to 1 part by mass of cobalt-containing compound based on 100 parts by mass of rubber component.

A rubber component of the rubber composition adopted in the coating rubber is not especially limited. An example of the rubber component includes a diene rubber such as a natural rubber, a polybutadiene rubber, a polyisoprene rubber, a styrene-butadiene copolymer rubber, an acrylonitrile-butadiene copolymer rubber, an ethylene-propylene copolymer rubber, an ethylene- propylene-diene terpolymer rubber, a butyl rubber, a halogenated butyl rubber, an alkylated chlorosulfonated polyethylene rubber, an isobutylene-isoprene copolymer rubber, and a polychloroprene rubber. One single rubber component among these rubber components may be adopted, or alternatively a combination of two or more kinds of the rubber components may be adopted.

As described below, the silica adopted in the present embodiment is compounded to suppress propagation of the crack and improve heat resistant adhesiveness. The silica to be adopted is not especially limited. The silica used in the rubber composition available on the market can be adopted. In this case, a wet type silica (hydrated silica), a dry type silica (anhydrous silica), a colloidal silica or the like can be adopted. Especially, the silica having a BET specific surface area of 50 m²/g to 400 m²/g is preferable. In the present embodiment, the BET specific surface area is measured by one point value in a BET method.

A compound amount of the silica is preferably set in a range between 1 part by mass and 15 parts by mass, more preferably set to 1.5 parts by mass or more, and most preferably set to 2 parts by mass or more based on 100 parts by mass of the rubber component from a viewpoint of suppression of the propagation of the crack, and improvement of the heat resistant adhesiveness.

In the rubber composition adopted in the coating rubber of the present embodiment, the cobalt-containing compound is set in a range between 0 parts by mass and 1 part by mass (0 (zero) or not more than 1 part by mass) based on 100 parts by mass of the rubber component. Examples of the cobalt-containing compound to be adopted include cobalt (single substance), organic acid cobalt salt, and inorganic acid cobalt salt. The cobalt-containing compound exemplarily includes cobalt chloride, cobalt nitrate, cobalt sulfate, cobalt acetate, cobalt citrate, cobalt gluconate, cobalt naphthenate, cobalt neodecanoate, cobalt stearate, cobalt rosinate, cobalt versatate, cobalt tallate, cobalt borate neodecanoate, and cobalt acetylacetonato.

Further, a complex salt in which a part of the organic acid is substituted with boric acid or the like may be adopted. The boron-containing organic acid cobalt salt can be cobalt orthoborate having a cobalt content of 20 mass% to 23 mass%. Examples of the boron-containing organic acid cobalt salt include Manobond C22.5 and Manobond 680C produced by Rhodia, CoMend A and CoMend B produced by Jhepherd, and YYNBC-II produced by Dainippon Ink And Chemicals, Incorporated.

Conventionally, the cobalt-containing compound has been compounded into a coating rubber composition of the metal cord-rubber composite, as an adhesion promoter. In the present embodiment, a content of the cobalt-containing compound is set in a range between 0 parts by mass and 1 part by mass based on 100 parts by mass of the rubber component, namely set to be 0 (zero) or not more than 1 part by mass (0 < the content of the cobalt-containing compound ≤ 1) from a viewpoint of improving heat degradation resistance and crack propagation resistance (crack resistance). Preferably, the content of the cobalt-containing compound is set to be 0 (zero) or not more than 0.1 parts by mass from a viewpoint of improving the heat degradation resistance and the crack propagation resistance at a higher level. More preferably, the cobalt-containing compound is not contained (the content is 0). This is because the addition of the cobalt-containing compound such as a cobalt salt might lead to aging of the rubber component, a disadvantage against the improvement of the durability and strength, and a disadvantage against cost. As a technique to largely reduce a use of the cobalt salt to the coating rubber composition, it is considered, for example, to adopt a steel cord with brass plating, which is washed by using a solution of transit metal salt such as cobalt salt, as a metal cord. Further, in the present embodiment, the content of the cobalt-containing compound is in term of the cobalt content.

In this way, in a case in which the rubber composition not containing the cobalt-containing compound, the belt having superior crack resistance can be obtained, and therefore by forming the rubber composition of the third belt and the fourth belt by the rubber composition not containing the cobalt-containing compound, the heavy load tire capable of further improving the durability can be provided.

Other component, which is other than the rubber component and the silica described above, adopted normally in a rubber industry may be compounded as needed into the coating rubber composition to be adopted, within a range not hindering an object of the present embodiment. Examples of the other component include a vulcanizer such as sulfur, a filler such as carbon black, oil such as process oil, a vulcanizing accelerator, an anti-aging agent, a softener, zinc oxide, stearic acid, and the like. The rubber composition adopted in the present embodiment can be manufactured by mixing these components using a conventional method, and warming and extruding it.

### Metal cord-rubber composite

The metal cord-rubber composite of the present embodiment can be manufactured by washing a plurality of the metal cords, which is subjected to each surface treatment, by using a conventional method as needed, and then by bonding the metal cords and the rubber composition for coating. The metal cord-rubber composite can be manufactured by bonding the metal cords after the surface treatment and the rubber composition having properties described above, for example, by vulcanization-bonding the metal cords and the rubber composition while pressurizing and heating. A vulcanization condition is not especially limited, however the pressure is preferably set in a range between 2 MPa and 15 MPa, more preferably set in a range between 2 MPa and 5 MPa, the temperature is preferably set in a range between 120 °C and 200 °C, more preferably set in a range between 130 °C and 170 °C. The vulcanization time is not especially limited, however the vulcanization time is preferably set in a range between 3 minutes and 60 hours.

It is somewhat indefinite regarding a mechanism why the metal cord-rubber composite of the present embodiment having such a configuration is superior in both of the heat resistant adhesiveness between the metal cord and the rubber and the crack propagation resistance (crack resistance) and why both of improvement of the heat resistant adhesiveness between the metal cord and the rubber and improvement of the crack propagation resistance can be achieved at a high level, however, it is assumed as below.

That is, in the metal cord-rubber composite of the present embodiment, the metal cord is coated with the rubber composition, the N atoms in the surface of the metal cord are set in a range between 2 atom% and 60 atom%, the Cu/Zn ratio is set in a range between 1 and 4, and the silica is set in a range between 1 part by mass and 15 parts by mass and the cobalt-containing compound is set in a range between 0 parts by mass and 1 part by mass based on 100 parts by mass of the rubber component in the rubber composition. It is consequently assumed that a fracture nucleus is hardly generated in the rubber of the rubber composition into which the silica is compounded, and therefore the crack propagation is suppressed and adhesiveness between the rubber and the metal is improved due to the silica absorbing a component that destroys an adhesion interface between the rubber and the metal in the rubber, and further the heat resistant adhesiveness is further improved by adopting the metal cord respectively setting the N atoms in the surface of the metal cord and the Cu/Zn ratio in the specific ranges, so that a synergistic effect of the improvement of the adhesiveness between the rubber and the metal and the improvement of the heat resistant adhesiveness is generated, and thereby an effect beyond a total of the effects caused by the respective techniques is derived.

Next, the metal cord-rubber composite adopted in the third belt 16c and the fourth belt 16d of the heavy load tire of the present embodiment is described with reference to examples and comparative examples.

### Examples 1 and 2 and Comparative examples 1 to 4

### Producing of metal cord

A steel cord (metal cord) having a 1 × 3 structure is produced by twisting steel wires on which the brass plating having a configuration described in Table 1 is applied (thickness of plating layer is 0.2 pm and a diameter of the wire is 0.3 mm). And then, the steel cord is washed by the treatment described below, namely treatment 1 using a treatment solution of an acetate buffer solution or a phosphate buffer solution and treatment 2 using a treatment solution of a rust prevention agent (triazole compound), and the cord is dried for one minute at 50 °C. The N amount (N amount in the outermost surface: atom%), the Cu/Zn ratio (Cu/Zn ratio in the outermost surface) in the surface of the wire plating of the washed steel cord, are measured by using an X-ray photoelectron spectroscopy device (Quantera produced by Ulvac-phi, Inc.). The measured results (expected) are shown in Table 1.

The measurement conditions by the X-ray photoelectron spectroscopy are as below.

X-ray source: Monochromatized Al-Kα ray
Measurement region: 50 µmφ
Measurement peak: C1s, O1s, N1s, P2p, Cu2p2/3, Zn2p2/3
Data treatment: Multipak (produced by Ulvac-phi, Inc.)
Quantitation: quantitated from the obtained peak area by using relative sensibility coefficient method
* Cu/Zn is a ratio of quantitative values of Cu2p2/3 and Zn2p2/3

### Treatment 1: treatment using acetate buffer solution

The treatment using the acetate buffer solution is a surface treatment that washes the produced steel cord for 10 seconds by using a treatment solution of 0.1N sodium acetate adjusted in pH by using acetic acid as shown in Table 1.

### Treatment 2: treatment using triazole compound (rust prevention agent)

The treatment using the triazole compound (rust prevention agent) is a surface treatment that washes the produced steel cord for 10 seconds by using a solution of the triazole compound adjusted in pH by using each triazole compound to be each concentration shown in Table 1.

By using the steel cord subjected to the washing treatment and the rubber composition having each configuration shown in Table 1, the heat resistant adhesiveness (shown by index number) and the crack propagation resistance (shown by index number) for the evaluation of the adhesiveness between the cord and the rubber are evaluated by the following method. The results (expected) are shown in Table 1.

### Evaluation method of heat resistant adhesiveness

The steel cords subjected to the washing treatment are arranged to be parallel with intervals of 12.5 mm and coated with the rubber composition from an upper side and a lower side, and then they are vulcanized for 80 minutes at 145 °C, so that the rubber composition and the steel cords are bonded. In this way, the metal cord-rubber composite in which the steel cords are embedded in the rubber sheet having a thickness of 1 mm is obtained (the steel cords are arranged at the center in a thickness direction of the rubber sheet with intervals of 12.5 mm).

After deteriorating the metal cord-rubber composite by leaving it at 80 °C and relative humidity of 40% for 7 days, according to ASTM-D-2229, the steel cords are pulled out from each sample, and the coating ratio of the rubber adhering to the steel cord is visually observed as 0 % to 100% to evaluate the hydrothermal deterioration performance. Each of the results is shown by an index number in Table 1 as the result of the comparative example 1 is defined as 100. As the index number is large, the heat resistant adhesiveness is superior.

### Evaluation method of crack propagation resistance

In the evaluation of the crack propagation resistance, a constant stress fatigue test of each sample is performed by using a fatigue test machine produced by Ueshima Seisakusho Co., Ltd., and each of the number of times until break thereof is measured. Each of the results is shown by an index number in Table 1 as the result of the comparative example 1 is defined as 100. As the index number is large, the crack propagation resistance is superior.

**Table 1**

| | | Compar ative example 1 | Compar ative example 2 | Compar ative example 3 | Compar ative example 4 | Example 1 | Example 2 |
|---|---|---|---|---|---|---|---|
| Metal cord | N amount (atom%) in outermo st surface | 1.5 | 14 | 14 | 1.5 | 14 | 14 |
| | Cu/Zn ratio in outermo st surface | 0.5 | 1.8 | 1.8 | 0.5 | 1.8 | 1.8 |
| | Treatme nt 1: acetate buffer solution (pH) | - | 6.6 | 6.6 | - | 6.6 | 6.6 |
| | Treatme nt 2: rust preventi on agent (concent ration g/L) | - | 10 | 10 | | 10 | 10 |
| | Kind of rust preventi on agent | | 1,2,4-tri azole | 1,2,4-tri azole | | 1,2,4-tri azole | 1,2,4-tri azole |
| | Bulk plating composi tion (Cu/Zn mass ratio) | 63/37 | 63/37 | 63/37 | 63/37 | 63/37 | 63/37 |
| Coating rubber compositi on (part by mass) | Natural rubber | 80 | 80 | 80 | 80 | 80 | 80 |
| | Polyisop rene rubber *1 | 20 | 20 | 20 | 20 | 20 | 20 |
| | Carbon black (C/B) *2 | 51 | 51 | 51 | 51 | 51 | 51 |
| | Silica *3 | - | - | - | 2 | 2 | 8 |
| | Zinc white | 9 | 9 | 9 | 9 | 9 | 9 |
| | Anti-agi ng agent *4 | 2.1 | 2.1 | 2.1 | 2.1 | 2.1 | 2.1 |
| | Vulcaniz ation accelera tor *5 | 0.6 | 0.6 | 0.6 | 0.6 | 0.6 | 0.6 |
| | Sulfur | 6.88 | 6.88 | 6.88 | 6.88 | 6.88 | 6.88 |
| | Cobalt salt of fatty acid *6 | 1 | 1 | - | - | - | - |
| Propertie s | Heat resistan t adhesive ness (index number) | 100 | 110 | 110 | No rubber adheres | 120 | 120 |
| | Crack propaga tion resistan ce (index number) | 100 | 100 | 130 | 145 | 145 | 145 |

The items *1 to *6 in Table 1 are as below.
*1: IR2200 produced by JSR Corporation
*2: Seast 3 (N₂SA: 79m/g, 24M4DBP absorption number: 102 m³/100g) produced by Tokai Carbon Co., Ltd.
*3: Nipsil AQ produced by Tosoh Silica Corporation
*4: Nocrac 6c, N-phenyl-N-(1,3-dimethylbutyl)-p-phenylenediamine produced by Ouchi Shinko Chemical Industrial Co., Ltd.
*5: Nocceler DZ, N,N'-dicyclohexyl-2-benzothiazolylsulfenamide produced by Ouchi Shinko Chemical Industrial Co., Ltd.
*6: Manobond C22.5 containing cobalt by 22.5 mass% produced by OMG

As obvious from Table 1, the metal cord-rubber composites according to the examples 1 and 2, which are included by the present embodiment, are superior in the heat resistant adhesiveness and the crack propagation resistance compared to those according to the comparative examples 1 to 4, which are excluded from the present embodiment. Therefore, the effect of the present embodiment can be confirmed.

Specifically, according to the examples, each of the examples 1 and 2 is a metal cord-rubber composite having a configuration in which the content of the silica in the coating rubber composition is changed within a range of the present embodiment, and the N atoms and the Cu/Zn ratio in the surface of the metal cord are within a range of the present embodiment, and the coating rubber composition is composed within a range of the present embodiment. Consequently, it can be confirmed that each of these metal cord-rubber composites can derive the effect of the present embodiment.

On the other hand, according to the comparative examples, the comparative example 1 is a metal cord-rubber composite having a configuration in which the N atoms and the Cu/Zn ratio in the surface of the metal cord are out of a range of the present embodiment, and the coating rubber composition is composed out of a range (silica is not compounded) of the present embodiment. Each of the comparative examples 2 and 3 is a metal cord-rubber composite having a configuration in which the N atoms and the Cu/Zn ratio in the surface of the metal cord are within a range of the present embodiment, while the coating rubber composition is composed out of a range (silica is not compounded) of the present embodiment. The comparative example 4 is a metal cord-rubber composite having a configuration in which the coating rubber composition is composed within a range of the present embodiment, while the N atoms and the Cu/Zn ratio in the surface of the metal cord are out of a range of the present embodiment. Consequently, it can be confirmed that each of the comparative examples 1 to 4 cannot derive the effect of the present embodiment.

In particular, considering the evaluation of the heat resistant adhesiveness and the crack propagation resistance of each of the metal cord-rubber composites of the comparative example 1 (the metal cord and the coating rubber composition are out of the range of the present embodiment), the comparative examples 2 and 3 (the coating rubber composition is out of the range of the present embodiment), and the comparative example 4 (the metal cord is out of the range of the present embodiment), when the evaluation of the heat resistant adhesiveness and the crack propagation resistance of the metal cord-rubber composite of each of the examples 1 and 2, which are within the range of the present embodiment, is compared with the evaluation of each of the comparative examples, it can be confirmed that the examples 1 and 2, which are within the range of the present embodiment, can derive remarkable effect compared to all of the comparative examples.

### Examples 11 to 14 and Comparative examples 11 to 13

Next, the heavy load tire of the present embodiment is described with reference to examples and comparative examples. In each example of the heavy load tire, the metal cord-rubber composite of the example 1 described above is adopted in each of the third belt 16c and the fourth belt 16d (the example 1 is also adopted in each of the first belt 16a, the second belt 16b, the fifth belt 16e, and the sixth belt 16f). In each comparative example of the heavy load tire, the metal cord-rubber composite of the comparative example 1 described above is adopted in each of the third belt 16c and the fourth belt 16d (the comparative example 1 is also adopted in each of the first belt 16a, the second belt 16b, the fifth belt 16e, and the sixth belt 16f).

A width of each of the third belt 16c and the fourth belt 16d is set to a value (shown by a ratio to a tire maximum width) shown in Table 2, and a width of each of the first belt 16a, the second belt 16b, the fifth belt 16e, and the sixth belt 16f is set to a width in a conventional tire. Each of the heavy load tires of the examples and the comparative examples having a tire size of 46/90R57 is produced by a conventional producing method.

Each of the heavy load tires of the examples 11 to 14 and the comparative examples 11 to 13 obtained in such a way is mounted to a standard rim (applicable rim) defined by TRA with a standard load and standard inner pressure (predetermined air pressure), and mounted to a front wheel of a dump truck having a weight of 240 tons. The dump truck traveled for a predetermined time. The wear resistance and the crack resistance of each of the examples and the comparative examples after the travelling are evaluated. The wear resistance (shown by index number) and the crack resistance (shown by index number) are evaluated by the following methods. The results (expected) are shown in Table 2.

### Evaluation method of wear resistance

After the travelling, the wear resistance is calculated based on a wear amount measured value in a predetermined position of the tread surface 11a (a position corresponding to 50% from a tire equatorial line CL to the end portion in the tire width direction of the tread surface 11a). The result is shown by an index number as the result of the comparative example 1 is defined as 100. As the index number is large, the wear resistance is superior.

### Evaluation method of crack resistance

Each tire after the travelling is cut in the tire width direction, and each crack length from each end portion in the tire width direction of the third belt 16c and the fourth belt 16d is measured. The crack resistance is calculated based on the crack length. The result is shown by an index number as the result of the comparative example 1 is defined as 100 similar to the wear resistance. As the index number is large, the crack resistance is superior.

**Table 2**

| | Compar ative example 11 | Comp ar ative example 12 | Compar ative example 13 | Example 11 | Example 12 | Example 13 | Example 14 |
|---|---|---|---|---|---|---|---|
| Width W3 of third belt 16c | 65% | 75% | 55% | 65% | 70% | 75% | 67% |
| Width W4 of fourth belt 16d | 55% | 67% | 50% | 55% | 65% | 67% | 58% |
| Metal cord-rubber composite | using Compar ative example 1 | using Compar ative example 1 | using Compar ative example 1 | using Example 1 | using Example 1 | using Example 1 | using Example 1 |
| Wear resistance | 100 | 113 | 91 | 100 | 109 | 114 | 104 |
| Crack resistance | 100 | 68 | 124 | 140 | 112 | 102 | 120 |

As obvious from the result shown in Table 2, each example achieves both of superior wear resistance of the tread portion and superior crack resistance of the belt, compared to each comparative example, and therefore the durability can be further improved as a whole of the tire.

Comparing the comparative example 11 with the example 11, the width of the third belt 16c is the same in each example. Further, the width of the fourth belt 16d is the same in each example. By widening the third belt 16c and the fourth belt 16d, superior wear resistance can be obtained in both examples. Regarding the crack resistance, the example 11 is more superior than the comparative example 11 because of the effect caused by the new metal cord-rubber composite.

Comparing the comparative example 12 with the example 13, the width of the third belt 16c is the same in each example. Further, the width of the fourth belt 16d is the same in each example. By further widening the width of the belt compared to those of the comparative example 11 and the example 11, further superior wear resistance can be obtained in both examples. Regarding the crack resistance, the example 13 is more superior than the comparative example 12 because of the effect caused by the new metal cord-rubber composite.

In the comparative example 13, the third belt 16c and the fourth belt 16d are not widened. Although the crack resistance is superior, the wear resistance of the tread surface is inferior to those of the examples 11 to 14 and the comparative examples 11 and 12 in which the third belt 16c and the fourth belt 16d are widened.

In this way, a superior result can be obtained in each of the examples 11 to 14, which has the width W3 of the third belt 16c and the width W4 of the fourth belts 16d set in respective preferable ranges of the present embodiment (the width W3 is set in a range between 65% and 85% of the tire maximum width Wm, and the width W4 is set in a range between 55% and 75% of the tire maximum width Wm) and adopts the new metal cord-rubber composite of the present embodiment in the third belt 16c and the fourth belt 16d, compared to the comparative examples 11 to 13 not adopting the new metal cord-rubber composite.

Further, a further superior result can be obtained in each of the examples 12 and 13, which has the width W3 of the third belt 16c and the width W4 of the fourth belts 16d set in respective more preferable ranges of the present embodiment (the width W3 is set in a range between 70% and 75% of the tire maximum width Wm, and the width W4 is set in a range between 65% and 70% of the tire maximum width Wm), compared to the examples 11 and 14 having the widths W3 and W4 set out of the more preferable ranges of the present embodiment. Regarding the crack resistance, a superior result can be obtained in each of the examples 12 and 13, compared to the comparative examples 11 and 12 with the third belt 16c and the fourth belt 16d widened.

As described above, although the embodiments of the present invention were described, each of the embodiments is merely an example for facilitating the understanding, and therefore the present invention is not limited to the embodiments. The subject matter of present invention can encompass not only the specific technical features disclosed in the embodiments but also a variety of modifications, changes, and alternate techniques.

### [Industrial Applicability]

The present invention can provide a heavy load tire with a belt widened, capable of achieving both of superior wear resistance of a tread portion and superior crack resistance of the belt at a high level, so that durability of a whole of the tire can be further improved.

### [Reference Signs List]

10: heavy load tire
11: tread portion
11a: tread surface
12: side wall portion
13: bead portion
14: carcass
14a: crown portion
15: bead core
16: belt layer
16a: first belt
16b: second belt
16c: third belt
16d: fourth belt
16e: fifth belt
16f: sixth belt

## Claims

1. A heavy load tire (10) comprising:
a tread portion (11);
a pair of side wall portions (12) continued to both ends of the tread portion (11);
a pair of bead portions (13) continued to the side wall portions (12);
a carcass (14) extended in a toroidal manner between the bead portions (13); and
a belt layer (16) arranged between the carcass (14) and the tread portion (11),
wherein:
the belt layer (16) has at least six belts laminated in a tire radial direction;
a width of a third belt (16c), which is arranged at a third position from an inner side in the tire radial direction among the belts, is set in range between 65% and 85% of a tire maximum width;
a width of a fourth belt (16d), which is arranged at a fourth position from the inner side in the tire radial direction among the belts, is set in range between 55% and 75% of the tire maximum width;
each of the belts is formed of a metal cord-rubber composite formed by coating a plurality of metal cords with a rubber composition; **characterized in that**,
the metal cord in each of the third belt (16c) and the fourth belt (16d) is formed such that N (nitrogen) atoms in a surface thereof is set in a range between 2 atom% and 60 atom% and a Cu/Zn ratio in the surface is set in a range between 1 and 4; and
the rubber composition in each of the third belt (16c) and the fourth belt (16d) includes 1 part by mass to 15 parts by mass of silica and 0 parts by mass to 1 part by mass of cobalt-containing compound based on 100 parts by mass of a rubber component,
wherein the N (nitrogen) atoms and the Cu/Zn ratio in a surface are measured using an X-ray photoelectron spectroscopy device under the measurement conditions set out below:
X-ray source: Monochromatized Al-Kα ray
Measurement region: 50 µmφ
Measurement peak: C1s, O1s, N1s, P2p, Cu2p2/3, Zn2p2/3 Data treatment: Multipak
Quantitation: quantitated from the obtained peak area by using relative sensibility coefficient method,
* Cu/Zn is a ratio of quantitative values of Cu2p2/3 and Zn2p2/3.

2. The heavy load tire (10) according to claim 1, wherein the width of the third belt (16c) is set in a range between 70% and 75% of the tire maximum width, and the width of the fourth belt (16d) is set in a range between 65% and 70% of the tire maximum width.

3. The heavy load tire (10) according to claim 1 or 2, wherein:
the metal cord in each of the third belt (16c) and the fourth belt (16d) is formed by a single metal wire having a periphery to which brass plating is applied or by twisting a plurality of the metal wires; and
in the composition of the brass plating, Cu is set in a range between 40 mass% and 80 mass% and Zn is set in a range between 20 mass% and 60 mass%.

4. The heavy load tire (10) according to any one of claims 1 to 3, the metal cord in each of the third belt (16c) and the fourth belt (16d) is subjected to both of surface treatment using a buffer solution having a pH of 5.0 to 7.2 and surface treatment using one or more kinds of triazole compounds selected from 1,2,4-triazole, 1,2,3-triazole, 3-amino-1,2,4-triazole, 4-amino-1,2,4-triazole, benzotriazole, tolyltriazole, and 3-mercapto-1,2,4-triazole.

5. The heavy load tire (10) according to any one of claims 1 to 4, wherein the rubber composition in each of the third belt (16c) and the fourth belt (16d) does not include the cobalt-containing compound.

## Patentansprüche

1. Schwerlastreifen (10), der Folgendes umfasst:
einen Laufflächenabschnitt (11),
ein Paar von Seitenwandabschnitten (12), die sich an beiden Enden des Laufflächenabschnitts (11) anschließen,
ein Paar von Wulstabschnitten (13), die sich an die Seitenwandabschnitte (12) anschließen,
eine Karkasse (14), die sich auf eine kreisringförmige Weise zwischen den Wulstabschnitten (13) erstreckt, und
eine Gürtellage (16), die zwischen der Karkasse (14) und dem Laufflächenabschnitt (11) angeordnet ist,
wobei:
die Gürtellage (16) mindestens sechs Gürtel aufweist, die in einer Reifenradialrichtung laminiert sind,
eine Breite eines dritten Gürtels (16c), der unter den Gürteln an einer dritten Position von einer in der Reifenradialrichtung inneren Seite angeordnet ist, in einem Bereich zwischen 65 % und 85 % einer maximalen Reifenbreite festgesetzt ist,
eine Breite eines vierten Gürtels (16d), der unter den Gürteln an einer vierten Position von der in der Reifenradialrichtung inneren Seite angeordnet ist, in einem Bereich zwischen 55 % und 75 % der maximalen Reifenbreite festgesetzt ist,
jeder der Gürtel aus einem Metallkord-Gummi-Verbundwerkstoff geformt ist, der durch Überziehen einer Vielzahl von Metallkords mit einer Gummizusammensetzung geformt wird,
**dadurch gekennzeichnet, dass**
der Metallkord in jedem von dem dritten Gürtel (16c) als auch dem vierten Gürtel (16d) derart geformt ist, dass N- (Stickstoff-) Atome in einer Oberfläche desselben in einem Bereich zwischen 2 Atom-% und 60 Atom-% festgesetzt sind und ein Cu/Zn-Verhältnis in der Oberfläche in einem Bereich zwischen 1 und 4 festgesetzt ist, und
die Gummizusammensetzung in jedem von dem dritten Gürtel (16c) als auch dem vierten Gürtel (16d) 1 Massenanteil bis 15 Massenanteile an Siliziumdioxid und 0 Massenanteile bis 1 Massenanteil an kobalthaltiger Verbindung auf Grundlage von 100 Massenanteilen eines Gummibestandteils einschließt,
wobei die N- (Stickstoff-) Atome und das Cu/Zn-Verhältnis in einer Oberfläche unter Verwendung einer Röntgen-Photoelektronenspektroskopie-Vorrichtung unter den unten dargelegten Messbedingungen gemessen werden:
Röntgenquelle: Monochromatisierter Al-Kα-Strahl,
Messbereich: 50 µmφ,
Messungsspitze: C1s, O1s, N1s, P2p, Cu2p2/3, Zn2p2/3,
Datenbearbeitung: MultiPak,
Quantifizierung: quantifiziert aus der Spitzenfläche durch Verwendung des relativen Empfindlichkeitskoeffizientenverfahrens,
^{∗}Cu/Zn ist ein Verhältnis von quantitativen Werten von Cu2p2/3 und Zn2p2/3.

2. Schwerlastreifen (10) nach Anspruch 1, wobei die Breite des dritten Gürtels (16c) in einem Bereich zwischen 70 % und 75 % der maximalen Reifenbreite festgesetzt ist und die Breite des vierten Gürtels (16d) in einem Bereich zwischen 65 % und 70 % der maximalen Reifenbreite festgesetzt ist.

3. Schwerlastreifen (10) nach Anspruch 1 oder 2, wobei:
der Metallkord in jedem von dem dritten Gürtel (16c) als auch dem vierten Gürtel (16d) durch einen einzelnen Metalldraht, der einen Umfang aufweist, auf den eine Messingbeschichtung aufgebracht ist, oder durch Verdrillen einer Vielzahl der Metalldrähte geformt ist, und
in der Zusammensetzung der Messingbeschichtung Cu in einem Bereich zwischen 40 Massen-% und 80 Massen-% festgesetzt ist und Zn in einem Bereich zwischen 20 Massen-% und 60 Massen-% festgesetzt ist.

4. Schwerlastreifen (10) nach einem der Ansprüche 1 bis 3, wobei der Metallkord in sowohl in jedem von dem dritten Gürtel (16c) als auch dem vierten Gürtel (16d) sowohl einer Oberflächenbehandlung unter Verwendung einer Pufferlösung, die einen pH-Wert von 5,0 bis 7,2 aufweist, als auch einer Oberflächenbehandlung unter Verwendung einer oder mehrerer Arten von Triazolverbindungen, die aus 1,2,4-Triazol, 1,2,3-Triazol, 3-Amino-1,2,4-Triazol, 4-Amino-1,2,4-Triazol, Benzotriazol, Tolyltriazol und 3-Mercapto-1,2,4-Triazol ausgewählt sind, unterworfen ist.

5. Schwerlastreifen (10) nach einem der Ansprüche 1 bis 4, wobei die Gummizusammensetzung in jedem von dem dritten Gürtel (16c) als auch dem vierten Gürtel (16d) die kobalthaltige Verbindung nicht einschließt.

## Revendications

1. Bandage pneumatique pour charges lourdes (10), comprenant :
une partie de bande de roulement (11) ;
une paire de parties de flanc (12) se prolongeant vers les deux extrémités de la partie de bande de roulement (11) ;
une paire de parties de talon (13) se prolongeant vers les parties de flanc (12) ;
une carcasse (14) s'étendant de manière toroïdale entre les parties de talon (13) ; et
une couche de ceinture (16) agencée entre la carcasse (14) et la partie de bande de roulement (11) ;
dans lequel :
la couche de ceinture (16) comporte au moins six ceintures stratifiées dans une direction radiale du bandage pneumatique ;
une largeur d'une troisième ceinture (16c) qui est agencée au niveau d'une troisième position à partir d'un côté interne, dans la direction radiale du bandage pneumatique, parmi les ceintures, est ajustée dans un intervalle représentant entre 65 % et 85 % d'une largeur maximale du bandage pneumatique ;
une largeur d'une quatrième ceinture (16d), qui est agencée au niveau d'une quatrième position à partir du côté interne, dans la direction radiale du bandage pneumatique, parmi les ceintures, est ajustée dans un intervalle représentant entre 55 % et 75 % de la largeur maximale du bandage pneumatique ;
chacune des ceintures est formée à partir d'un composite câblé-caoutchouc formé en revêtant une pluralité de câblés métalliques d'une composition de caoutchouc ;
**caractérisé en ce que** :
le câblé métallique dans chacune de la troisième ceinture (16c) et de la quatrième ceinture (16d) est formé de sorte que les atomes de N (azote) dans la surface de celui-ci sont ajustés dans un intervalle compris entre 2% d'atomes et 60% d'atomes et un rapport Cu/Zn dans la surface est ajusté dans un intervalle compris entre 1 et 4 ; et
la composition de caoutchouc dans chacune de la troisième ceinture (16c) et de la quatrième ceinture (16d) inclut d'une partie en poids à 15 parties en poids de silice et de 0 partie en poids à 1 partie en poids d'un composé à base de cobalt sur la base de 100 parties en poids du composant de caoutchouc ;
dans lequel les atomes de N (azote) et le rapport Cn/Zn dans une surface sont mesurés en utilisant un dispositif de spectrographie aux rayons X, dans les conditions de mesure indiquées ci-dessous :
source de rayons X : rayon Al-Kα monochromatisé
région de mesure : 50 µm φ
pic de mesure : C1s O1s N1s, P2p, Cu2p2/3, Zn2p2/3
traitement de données: Multipak
quantification : quantifiée à partir de la zone de pic obtenue en utilisant la méthode du coefficient de sensibilité relative;
Cu/Zn est un rapport de valeurs quantitatives de Cu2p2/3 et de Zn2p2/3.

2. Bandage pneumatique pour charges lourdes (10) selon la revendication 1, dans lequel la largeur de la troisième ceinture (16c) est ajustée dans un intervalle représentant entre 70 % et 75 % de la largeur maximale du bandage pneumatique, et la largeur de la quatrième ceinture (16d) est ajustée dans un intervalle représentant entre 65 % et 70 % de la largeur maximale du bandage pneumatique.

3. Bandage pneumatique pour charges lourdes (10) selon la revendication 1 ou 2, dans lequel :
le câblé métallique dans chacune de la troisième ceinture (16c) et de la quatrième ceinture (16d) est formé par un seul fil métallique ayant une périphérie sur laquelle est appliqué un placage de laiton ou en torsadant une pluralité de fils métalliques ; et
dans la composition de placage de laiton, le Cu est ajusté dans un intervalle représentant 40 % en poids et 80 % en poids, et le Zn est ajusté dans un intervalle représentant entre 20 % en poids et 60 % en poids.

4. Bandage pneumatique pour charges lourdes (10) selon l'une quelconque des revendications 1 à 3, le câblé métallique dans chacune de la troisième ceinture (16c) et de la quatrième ceinture (16d) étant soumis à la fois à un traitement de surface utilisant une solution tampon ayant un pH allant de 5,0 à 7,2 et à un traitement de surface utilisant un ou plusieurs types de composés de triazole sélectionnés parmi le 1,2,4-triazole, le 1,2,3-triazole, le 3-amino-1,2,4-triazole, le 4-amino-1,2,4-triazole, le benzotriazole, le tolyltriazole, et le 3-mercapto-1,2,4-triazole.

5. Bandage pneumatique pour charges lourdes (10) selon l'une quelconque des revendications 1 à 4, dans lequel la composition de caoutchouc dans chacune de la troisième ceinture (16c) et de la quatrième ceinture (16d) n'inclut pas le composé à base de cobalt.
